# EUROPEAN PATENT APPLICATION

(11) **EP 1 452 810 A1**
(43) Date of publication of application: **01.09.2004**
(21) Application number: 03100509.3
(22) Date of filing: 28.02.2003
(51) Int. Cl.: F25B 49/02, F25B 41/06, B60H 1/32

(54) **Method for controlling the head pressure in a transcritical refrigeration system**

(71) Applicant: Delphi Technologies, Inc., Troy, MI 48007 (US)
(72) Inventor: PAOLILLO, Giorgio, 20133 MILANO (IT)
(74) Representative: Beissel, Jean

(57) **Abstract**

Method for controlling the head pressure in a transcritical refrigeration system (10) comprising a compressor (12), a first heat exchanger (14), an expansion device (16) and a second heat exchanger (18) connected in series in a refrigerant flow circuit, wherein the expansion device (16) controls the head pressure. According to the invention, the method comprises the steps of:
- detecting the opening state of the expansion device (16) for determining if the expansion device (16) is substantially fully open;
- detecting the head pressure of the refrigerant between the compressor (12) and the expansion device (16); and
- reducing the stroke of the compressor (12) if the expansion device (16) is substantially fully open and the head pressure has reached a predetermined level.

## Description

### Introduction

The present invention generally relates to a method for controlling the head pressure in a transcritical refrigeration system.

In transcritical refrigeration systems, in particular in CO₂ refrigeration systems, a compressor is used for compressing the refrigerant to a high pressure. From an outlet port of the compressor, the refrigerant flows via a first heat exchanger, generally referred to as gas cooler, to an expansion device where the refrigerant expands. From the expansion device the refrigerant flows via a second heat exchanger, generally referred to as evaporator, to an inlet port of the compressor, where the refrigerant is again compressed.

A transcritical refrigeration system operates partly below and partly above the refrigerant's critical pressure. In the supercritical region, i.e. in the region where the pressure is above the refrigerant's critical pressure, pressure is more or less independent of temperature since there is no longer any saturation condition. Pressure can therefore be freely chosen as a design variable. Downstream from the compressor outlet, the refrigerant is cooled at mainly constant pressure in a gas cooler. The cooling gradually increases the density of the single-phase refrigerant.

The head pressure, i.e. the pressure of refrigerant between the compressor outlet port and the expansion device, is regulated by means of the expansion device. Increasing and decreasing the opening of the expansion device determines the flow rate of the refrigerant through the expansion device, thereby regulating the pressure upstream of the expansion device. By increasing the opening of the expansion device, a greater amount of high-pressure refrigerant flows through the expansion device, thereby reducing the pressure upstream of the expansion device. The head pressure is hence reduced. Similarly, by decreasing the opening of the expansion device, a lesser amount of high-pressure refrigerant flows through the expansion device, thereby building up pressure upstream of the expansion device. The head pressure is hence increased. The head pressure, i.e. the pressure upstream of the expansion device, can hence be regulated by controlling the opening of the expansion device.

For maximum cooling capacity, the head pressure is generally kept as high as possible, without however exceeding a predetermined safe level.

Under some more critical driving conditions, e.g. at high ambient temperature and/or at high engine speeds, the head pressure can rise above a "normal" level. The head pressure can rise so high that the expansion device is no longer able to keep it below the predetermined safe level. Indeed, once the expansion device has reached its fully open position, the head pressure cannot be further reduced. The head pressure remains above the safe level and damage to the refrigerant lines and the gas cooler can occur.

One way of ensuring that no damage can occur to any components is to design the expansion device to work under all conditions, even under the more critical conditions. However, due to the fact that the more critical conditions are generally relatively rare, a whole operating range of the expansion device is hardly ever used.

Another way of ensuring that no damage can occur to any components is to declutch the compressor from the engine in more critical conditions. Declutching however has a negative effect on driveability of the car and should be avoided. Also, a loss of efficiency of the refrigeration system might occur.

### Object of the invention

The object of the present invention is to provide an improved method for controlling the head pressure in a transcritical refrigeration system.

### General description of the invention

This object is achieved by a method for controlling the head pressure in a transcritical refrigeration system according to claim 1, the system comprising a compressor, a first heat exchanger, an expansion device and a second heat exchanger connected in series in a refrigerant flow circuit, wherein the expansion device controls the head pressure. According to the invention, the method comprises the steps of:
- detecting the opening state of the expansion device for determining if the expansion device is substantially fully open;
- detecting the head pressure of the refrigerant between the compressor and the expansion device; and
- reducing the stroke of the compressor if the expansion device is substantially fully open and the head pressure has reached a predetermined level.

The expansion device is operated to further open or further close in order to regulate the pressure of the refrigerant upstream of the expansion device. However, once the expansion device has reached its physical limitation, i.e. once the expansion device is fully open, it can no longer further open to further reduce head pressure. According to the present invention, if it is detected that the expansion device is fully open and that the head pressure needs reducing, the stroke of the compressor, which is e.g. an adjustable stroke compressor, is reduced. The reduction of the stroke of the compressor entails a reduction in refrigerant being fed to the high-pressure side of the system. As the expansion device is still fully open, this leads to a reduction in refrigerant pressure between the compressor and the expansion device.

Only if the expansion device is not able, due to physical limitations, to further reduce head pressure, the head pressure is kept below a safe level through regulation of the stroke of the compressor. It will be appreciated that, in order to maintain maximum efficiency of the refrigeration system, regulation of the head pressure by means of stroke regulation only occurs when the expansion device is fully open.

Furthermore, the reduction of stroke of the compressor does not have a noticeable effect on the engine itself. The compressor is not declutched from the engine, so that a smoother running of the engine and improved driveability is achieved.

The present method also allows for the compressor and the expansion device to be designed for normal operation, i.e. for operation in normal driving conditions. If more extreme driving conditions, such as high ambient temperature and/or high engine speed, occur, the expansion device reduces the head pressure as far as possible, i.e. until the expansion device is fully open. In order to further reduce the head pressure, the stroke of the compressor is then reduced. Critical driving conditions do hence not need to be taken into account when designing the expansion device.

The head pressure is preferably detected at, or close to, an outlet port of the compressor. Close to the outlet port of the compressor, the pressure between the compressor and the expansion device is highest. Indeed, there is a small pressure drop through the gas cooler. For safety reasons, it is therefore preferable to measure the head pressure as close as possible to the outlet port of the compressor.

The head pressure is preferably detected by means of a pressure gauge.

The expansion device is preferably an electronically controlled expansion valve.

The predetermined safe level can be dependent on one or more of the following parameters: engine speed, ambient temperature, compressor discharge pressure, gas cooler outlet temperature. The predetermined safe level can e.g. be determined using look-up tables or through closed-loop control.

The refrigerant to be used in the transcritical refrigeration system can be chosen in the group comprising ethylene (C₂H₄), diborane (B₂H₆), carbon dioxide (CO₂), ethane (C₂H₆) and nitrogen oxide (N₂O).

### Detailed description with respect to the figures

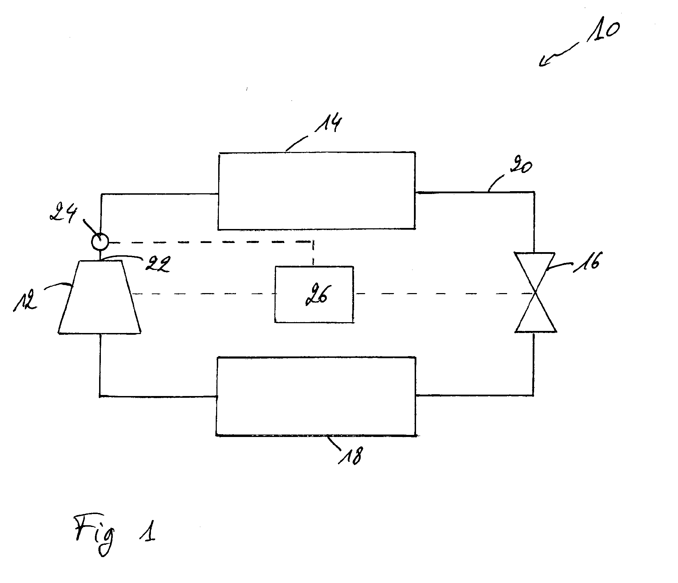

The present invention will be more apparent from the following description of a not limiting embodiment with reference to the attached figure 1, which schematically shows a transcritical refrigeration system.

The transcritical refrigeration system 10 shown in Fig.1 comprises an adjustable stroke compressor 12, a gas cooler 14, an expansion device 16, preferably an electronically controlled expansion valve, and an evaporator 18 connected in series via refrigeration lines 20 such as to form a closed circuit. A refrigerant in the circuit, e.g. CO₂, is compressed by the compressor 12 to a pressure above the critical pressure of the refrigerant. In such conditions, pressure is more or less independent of temperature since there is no longer any saturation condition. Pressure can therefore be freely chosen as a design variable. From an outlet port 22 of the compressor, the compressed refrigerant is led to the gas cooler 14, where the refrigerant is cooled at mainly constant pressure. The cooling gradually increases the density of the refrigerant. From the gas cooler 14, the cooled refrigerant is led to the expansion device 16 in which the refrigerant expands and the pressure drops below the critical pressure of the refrigerant. The expanded refrigerant is then led through the evaporator 18 back to the compressor 12, where it is again compressed.

The head pressure of the refrigerant, i.e. the refrigerant pressure between the compressor 12 and the expansion device 16, is regulated by means of the expansion device 16. In order to reduce the head pressure, the expansion device 16 is operated so as to further increase the opening thereof. A greater amount of high-pressure refrigerant thereby flows through the expansion device 16, and relieves the pressure upstream of the expansion device 16. In order to increase the head pressure, the expansion device 16 is operated so as to further decrease the opening thereof. A lesser amount of high-pressure refrigerant thereby flows through the expansion device 16, and the pressure upstream of the expansion device 16 builds up.

A pressure gauge 24 is arranged between the compressor 12 and the expansion device 16 in the high-pressure side of the system, for measuring the head pressure. Preferably, the pressure gauge 24 is located as close as possible to the outlet port 22 of the compressor 12.

A signal representative of the detected pressure is fed to a control unit 26, which analyses the received signal and controls the opening of the expansion device 16 accordingly. When the control unit 26 detects that the head pressure is above a predetermined level, it operates the expansion device 16 to further increase the opening thereof so as to increase the rate of flow of the refrigerant through the expansion device 16, thereby reducing the head pressure. On the other hand, when the control unit 26 detects that the head pressure is below a predetermined level, it operates the expansion device 16 to further reduce the opening thereof so as to decrease the rate of flow of the refrigerant through the expansion device 16, thereby increasing the head pressure.

The control unit 26 further comprises means for determining whether or not the expansion device 16 is substantially fully open. If the control unit 26 detects that the expansion device 16 is in a substantially fully open position and that the detected head pressure is too high, it controls the compressor 12 so as to reduce the stroke of the latter. By reducing the stroke of the compressor 12, the flow rate of refrigerant into the high-side of the system is reduced. If the flow rate of refrigerant out of the compressor is smaller than the flow rate of refrigerant through the expansion device, the pressure between the compressor and the expansion device is reduced.

When normal operating conditions are resumed, the refrigerant discharge is reduced. The control unit 26 returns to regulating the head pressure by means of the expansion device 16 when the expansion device 16 is essentially fully open and the cooling capacity is too high, or when the compressor operates at full stroke and the head pressure falls below the predetermined safe level.

### List of reference signs

- 10: transcritical refrigeration system
- 12: compressor
- 14: gas cooler
- 16: expansion device
- 18: evaporator
- 20: refrigeration lines
- 22: outlet port of the compressor
- 24: pressure gauge
- 26: control unit

## Claims

1. Method for controlling the head pressure in a transcritical refrigeration system, said system comprising a compressor, a first heat exchanger, an expansion device and a second heat exchanger connected in series in a refrigerant flow circuit, wherein said expansion device controls said head pressure, said method comprising the steps of:
detecting the opening state of said expansion device for determining if said expansion device is substantially fully open;
detecting the head pressure of said refrigerant between said compressor and said expansion device; and
reducing the stroke of said compressor if said expansion device is substantially fully open and said head pressure has reached a predetermined level.

2. Method according to any of the previous claims, wherein said head pressure is detected at, or close to, an outlet port of said compressor.

3. Method according to any of the previous claims, wherein said head pressure is detected by means of a pressure gauge.

4. Method according to any of the previous claims, wherein said expansion device is an electronically controlled expansion valve.

5. Method according to any of the previous claims, wherein said predetermined safe level is dependent on one or more of the following parameters:
engine speed, ambient temperature, compressor discharge pressure, gas cooler outlet temperature.

6. Method according to any of the previous claims, wherein said refrigerant is chosen in the group comprising:
ethylene (C₂H₄), diborane (B₂H₆), carbon dioxide (CO₂), ethane (C₂H₆) and
nitrogen oxide (N₂O).
